# EUROPEAN PATENT APPLICATION

(11) **EP 4 631 406 A1**
(43) Date of publication of application: **15.10.2025**
(21) Application number: 25168955.0
(22) Date of filing: 07.04.2025
(51) Int. Cl.: A47J 47/02

(54) **FOOD CONTAINER WITH VISUAL INDICATION AND RELATED METHODS**

(30) Priority: 08.04.2024 US 202463631032 P
(71) Applicant: Global Caviar Inc., St. Petersburg, Florida 33702 (US)
(72) Inventor: GORELIK, Ariel, St. Petersburg, 33702 (US)
(74) Representative: Valet Patent Services Limited

(57) **Abstract**

A food container includes a housing defining a food receiving recess and having a closed first end and an open second end opposite the closed first end, and a lid to be received by the open second end of the housing and having opposing first and second major surfaces. The first major surface faces the food receiving recess, and the second major surface defines a recess. The food container also includes an electronic device to be received by the recess and having a device housing, a battery carried within the device housing, a visual indicator carried by the device housing and coupled to the battery, and a processor carried by the device housing and coupled to the battery and the visual indicator. The processor is configured to cause the visual indicator to generate a visual indication.

## Description

### Related Application

This application is based upon prior filed copending Application No. 63/631,032 filed April 8, 2024, the entire subject matter of which is incorporated herein by reference in its entirety.

### Technical Field

The present disclosure relates to the field of food containers, and, more particularly, to a food container with light features and related methods.

### Background

Food packaging is a robust international industry. Indeed, the industry generated about $400 billion in revenue in 2024. Depending on the product and application, the features for food packaging can vary greatly. For some applications, protection during transportation and direct customer appeal are important. In some luxury products, aesthetic appeal of the packaging may be important.

### Summary

Generally, a food container (e.g., caviar container) comprises a housing defining a food receiving recess therein and having a closed first end and an open second end opposite the closed first end, and a lid to be received by the open second end of the housing and having opposing first and second major surfaces. The first major surface faces the food receiving recess, and the second major surface defines a recess. The food container also includes an electronic device to be received by the recess and comprising a device housing, a battery carried within the device housing, a visual indicator carried by the device housing and coupled to the battery, and a processor carried by the device housing and coupled to the battery and the visual indicator. The processor is configured to cause the visual indicator to generate a visual indication.

In some embodiments, the electronic device may comprise a sensor carried by the device housing and coupled to the processor, and the processor may be configured to activate the visual indicator based upon the sensor. The sensor may comprise an ambient light sensor, and the processor may be configured to activate the visual indicator when the ambient light sensor detects an ambient light value below a threshold value. Also, the sensor may comprise a proximity sensor, and the processor may be configured to activate the visual indicator when the proximity sensor detects a moving object within a threshold distance. The recess may define a canted annular lid wall, and the device housing may define a canted annular device wall to abut the canted annular lid wall.

Further, the visual indicator may comprise at least one light emitting diode (LED) carried by an external surface of the device housing. The electronic device may comprise an overlayer on the visual indicator, the overlayer comprising visual indicia. The uppermost portions of the lid may be flush and aligned with uppermost portions of the device housing. For example, the recess may comprise a circle-shaped recess, and the device housing may be disc-shaped and received by the circle-shaped recess. The lid and the housing may each comprise a metallic material, the device housing may comprise a plastic material, and the housing may comprise inner surfaces defining the food receiving recess, and a coating layer on the inner surfaces.

Another aspect is directed to a method for making a food container. The method comprises forming a housing defining a food receiving recess therein and having a closed first end and an open second end opposite the closed first end, and forming a lid to be received by the open second end of the housing and having opposing first and second major surfaces, the first major surface to face the food receiving recess, the second major surface defining a recess. The method also includes positioning an electronic device to be received by the recess. The electronic device includes a device housing, a battery carried within the device housing, a visual indicator carried by the device housing and coupled to the battery, and a processor carried by the device housing and coupled to the battery and the visual indicator, the processor configured to cause the visual indicator to generate a visual indication.

### Brief Description of the Drawings

FIG. 1 is a perspective view of a food container, according to the present disclosure.
FIG. 2 is a side view of a lid from the food container of FIG. 1.
FIG. 3 is a perspective view of an electronic device from the food container of FIG. 1.
FIG. 4 is a side view of the electronic device from the food container of FIG. 1.
FIG. 5 is a side view of the food container of FIG. 1.

### Detailed Description

The present disclosure will now be described more fully hereinafter with reference to the accompanying drawings, in which several embodiments of the invention are shown. This present disclosure may, however, be embodied in many different forms and should not be construed as limited to the embodiments set forth herein. Rather, these embodiments are provided so that this disclosure will be thorough and complete, and will fully convey the scope of the present disclosure to those skilled in the art. Like numbers refer to like elements throughout.

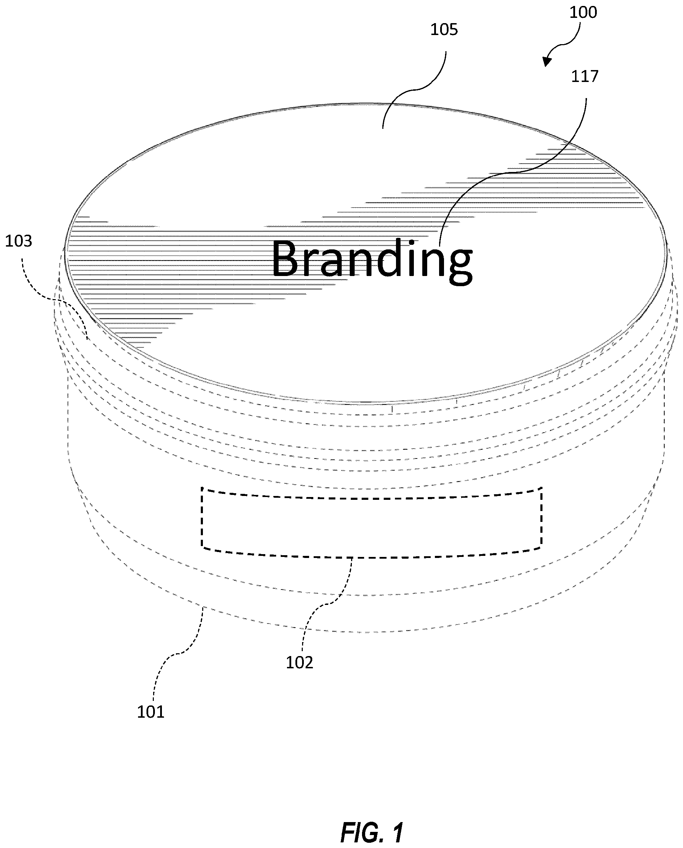

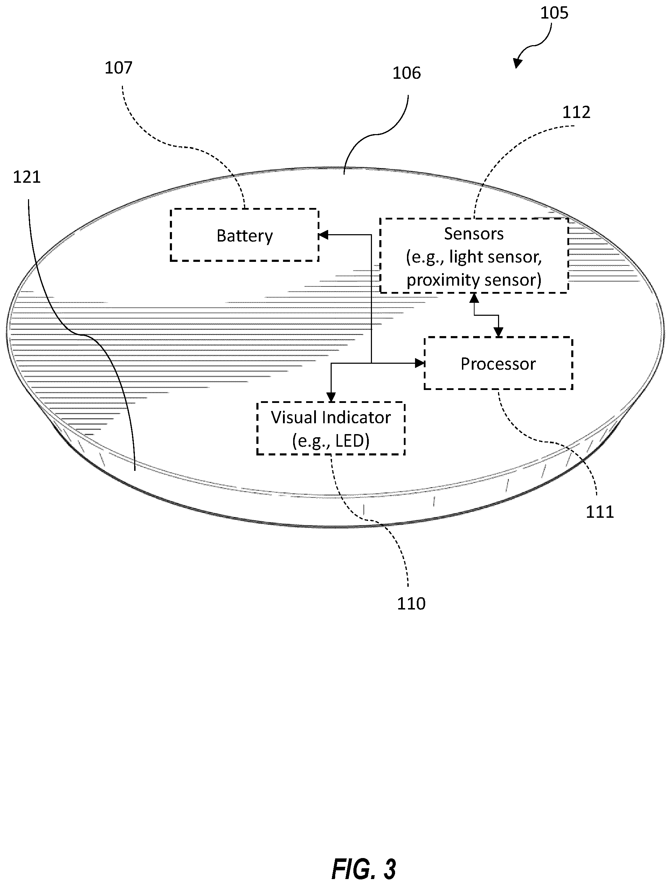

Referring to FIGS. 1-5, a food container **100** according to the present disclosure is now described. The food container **100** illustratively comprises a housing **101** defining a food receiving recess **102** therein. As will be appreciated, the food receiving recess **102** may receive many types of food, for example, caviar.

The housing **101** comprises a closed first end and an open second end opposite the closed first end. Although the illustrated embodiment has a cylinder-shaped housing **101** and cylinder-shaped food receiving recess **102,** in other embodiments, the housing **101** may have other shapes, such as a shape with tapering sides, a rectangle-box shape, or a pyramid-shape, for example. The housing **101** may comprise a rigid material suitable for food storage, such as plastic or aluminum.

The food container **100** illustratively includes a lid **103** to be received by the open second end of the housing **101** and having a first major surface **104a** and a second major surface **104b** opposing the first major surface. The first major surface **104a** is to face the food receiving recess **102,** and the second major surface **104b** defines a circle-shaped recess **108.** The lid **103** may comprise a rigid material suitable for food storage, such as plastic or aluminum. The lid **103** may be coupled to the open second end of the housing **101** via a mechanical interface. The mechanical interface may comprise a threaded interface, an interlocking interface, or a pressure fit interface.

The food container **100** also includes a light device **105** to be received by the circle-shaped recess. The light device **105** comprises a disc-shaped housing **106,** a battery **107** carried within the disc-shaped housing, and a visual indicator **110** carried by the disc-shaped housing. In the illustrated embodiment, the disc-shaped housing **106** comprises a circle-shaped disc shape, but in other embodiments, the disc-shaped housing **106** may have other shapes that match the varying shape of the housing **101.**

The visual indicator **110** is coupled to the battery **107,** and configured to generate a visual indication. For example, the visual indicator **110** may comprise one or more LEDs carried by the external surface of the disc-shaped housing **106.** As will be appreciated, the visual indicator **110** may provide enhanced aesthetics for the food container **100.** The light device **105** illustratively includes a processor **111** and one or more sensors **112** to control activation of the visual indicator **110.** In one exemplary embodiment, the one or more sensors comprise a proximity sensor, and the processor is configured to activate the visual indicator **110** when a user's hand is detected. In another exemplary embodiment, the one or more sensors comprise an ambient light sensor, and the processor is configured to activate the visual indicator **110** when ambient light is below a threshold.

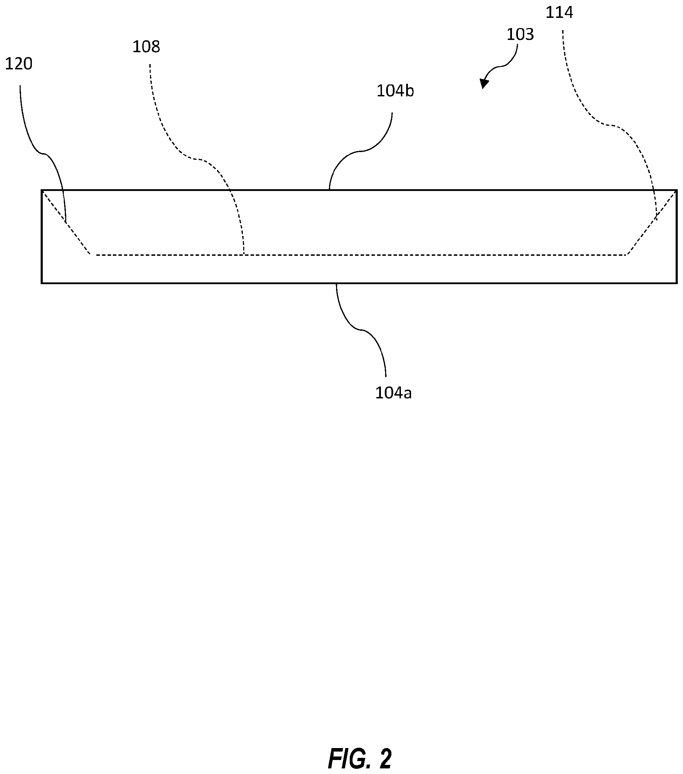

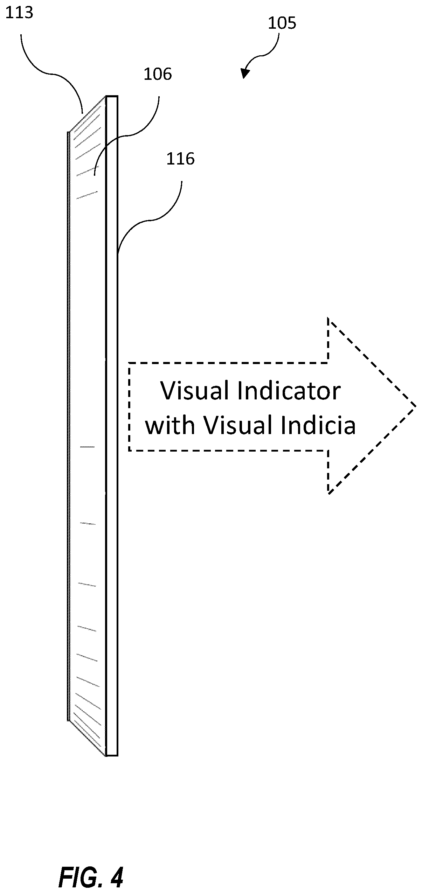

As perhaps best seen in FIGS. 2 & 4, the light device **105** and the circle-shaped recess **108** have matching canted annular walls **113, 114.** The matching canted annular walls **113, 114** may provide for a tight and secure fit of the light device **105** and the lid **103.**

Another aspect is directed to a method for making a food container **100.** The method comprises forming a housing **101** defining a food receiving recess **102** therein and having a closed first end and an open second end opposite the closed first end. The method further includes forming a lid **103** to be received by the open second end of the housing **101** and having opposing first and second major surfaces **104a-104b.** The first major surface **104a** is to face the food receiving recess **102,** and the second major surface **104b** defines a circle-shaped recess. The method also includes positioning a light device **105** to be received by the circle-shaped recess. The light device **105** comprises a disc-shaped housing **106,** a battery **107** carried within the disc-shaped housing, and a visual indicator **110** carried by the disc-shaped housing, coupled to the battery, and configured to generate a visual indication.

Referring again to FIGS. 1-5, a caviar container **100** according to the present disclosure is now described. Of course, it should be appreciated that the caviar container **100** may be used to store other food products or non-food products in other applications. The caviar container **100** includes a housing **101** comprising inner surfaces defining a food receiving recess **102,** and a coating layer **115** on the inner surfaces. As will be appreciated, the coating layer **115** may provide protection from adulteration for the caviar in the food receiving recess **102.** The housing **101** also includes a closed first end (i.e., bottom end) and an open second end opposite the closed first end.

The caviar container **100** also comprises a lid **103** to be received by the open second end of the housing **101** and having opposing first and second major surfaces **104a-104b.** Each of the opposing first and second major surfaces **104a-104b** is substantially flat or completely flat. The first major surface **104a** faces the food receiving recess **102,** and the second major surface **104b** defines a circle-shaped recess **108.** The lid **103** and the housing **101** may each comprise a metallic material (e.g., tin, steel, aluminum).

The caviar container **100** also includes an electronic device **105** to be received by the circle-shaped recess **108** and comprising a disc-shaped device housing **106,** a battery **107** carried within the device housing, a visual indicator **110** carried by the disc-shaped device housing and coupled to the battery, and a processor **111** carried by the disc-shaped device housing and coupled to the battery and the visual indicator. For example, the visual indicator **110** may comprise one or more LEDs carried by an external surface of the disc-shaped device housing **106.** The disc-shaped device housing **106** may comprise a dielectric material, such as plastic material, for example, or another rigid material, for example, a metallic material.

The processor **111** is configured to cause the visual indicator to generate a visual indication. The electronic device **105** illustratively includes an overlayer **116** on the visual indicator **110,** the overlayer comprising visual indicia **117** (e.g., branding for the product in the food receiving recess **102).** The overlayer **116** is at least partially transparent to visual light radiation; therefore, the visual indication is transmitted through the overlayer **116,** highlighting the visual indicia **117** to potential customers.

The electronic device **105** illustratively comprises a sensor **112** carried by the disc-shaped device housing **106** and coupled to the processor **111,** and the processor **111** is configured to activate the visual indicator **110** based upon the sensor. In some embodiments, the sensor **112** may comprise an ambient light sensor, and the processor **111** may be configured to activate the visual indicator **110** when the ambient light sensor detects an ambient light value below a threshold value, thereby providing a dynamic lighting effect for the customer when the caviar container **100** is in darkened conditions.

Also, in other embodiments, the sensor **112** may comprise a proximity sensor, such as a range finding device. Here, the processor **111** is configured to activate the visual indicator **110** when the proximity sensor detects a moving object within a threshold distance. In some embodiments, the sensor **112** may comprise one or more sensor modalities, such as both of the proximity sensor and the ambient light sensor, thereby activating the visual indicator **110** when the sensor detects the moving object within a threshold distance and when the sensor detects the ambient light value below the threshold value.

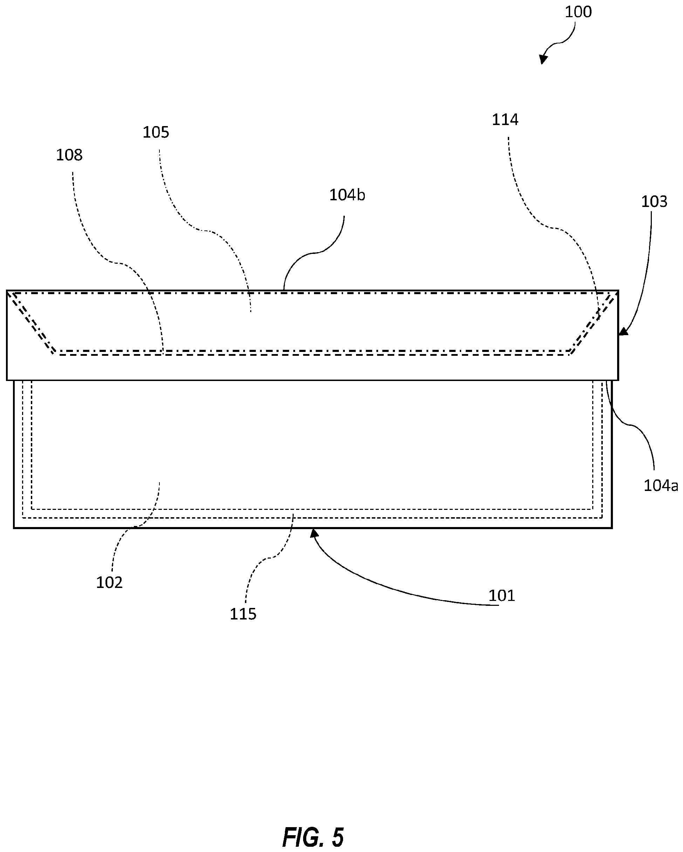

As perhaps best seen in FIG. 5, the circle-shaped recess **108** illustratively defines a canted annular lid wall **120,** and the disc-shaped device housing **106** illustratively defines a canted annular device wall **121** to abut the canted annular lid wall. Also, the uppermost portions of the lid **103** are illustratively flush and aligned with uppermost portions of the disc-shaped device housing **106.** Helpfully, this provides for a smooth exterior body, which may reduce space for stocking and storing of the caviar container **100.** Further, this smooth seamless packaging is desirable in luxury products, such as caviar.

Another aspect is directed to a method for making a caviar container **100.** The method comprises forming a housing **101** defining a food receiving recess **102** therein and having a closed first end and an open second end opposite the closed first end, and forming a lid **103** to be received by the open second end of the housing and having opposing first and second major surfaces, the first major surface **104a** to face the food receiving recess, the second major surface **104b** defining a circle-shaped recess **108.** The method also includes positioning an electronic device **105** to be received by the circle-shaped recess **108.** The electronic device **105** includes a disc-shaped device housing **106,** a battery **107** carried within the device housing, a visual indicator **110** carried by the disc-shaped device housing and coupled to the battery, and a processor **111** carried by the disc-shaped device housing and coupled to the battery and the visual indicator. The processor **111** is configured to cause the visual indicator **110** to generate a visual indication.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. A food container comprising:
a housing defining a food receiving recess therein and having a closed first end and an open second end opposite the closed first end;
a lid to be received by the open second end of the housing and having opposing first and second major surfaces, the first major surface to face the food receiving recess, the second major surface defining a recess; and
an electronic device to be received by the recess and comprising
a device housing,
a battery carried within the device housing,
a visual indicator carried by the device housing and coupled to the battery, and
a processor carried by the device housing and coupled to the battery and the visual indicator, the processor configured to cause the visual indicator to generate a visual indication.

2. The food container of claim 1 wherein the electronic device comprises a sensor carried by the device housing and coupled to the processor; and wherein the processor is configured to activate the visual indicator based upon the sensor.

3. The food container of claim 2 wherein the sensor comprises an ambient light sensor; and wherein the processor is configured to activate the visual indicator when the ambient light sensor detects an ambient light value below a threshold value, or wherein the sensor comprises a proximity sensor; and wherein the processor is configured to activate the visual indicator when the proximity sensor detects a moving object within a threshold distance.

4. The food container of any preceding claim wherein the recess defines a canted annular lid wall; and wherein the device housing defines a canted annular device wall to abut the canted annular lid wall.

5. The food container of any preceding claim wherein the visual indicator comprises at least one light emitting diode (LED) carried by an external surface of the device housing.

6. The food container of any preceding claim wherein the electronic device comprises an overlayer on the visual indicator, the overlayer comprising visual indicia.

7. The food container of any preceding claim wherein uppermost portions of the lid are flush and aligned with uppermost portions of the device housing.

8. The food container of any preceding claim wherein the recess comprises a circle-shaped recess; and wherein the device housing is disc-shaped and received by the circle-shaped recess.

9. The food container of any preceding claim wherein the lid and the housing each comprises a metallic material; wherein the device housing comprises a plastic material; and wherein the housing comprises inner surfaces defining the food receiving recess, and a coating layer on the inner surfaces.

10. A caviar container comprising:
a housing comprising inner surfaces defining a food receiving recess therein, a coating layer on the inner surfaces, a closed first end, and an open second end opposite the closed first end, the housing comprising a metallic material;
a lid to be received by the open second end of the housing and having opposing first and second major surfaces, the first major surface to face the food receiving recess, the second major surface defining a circle-shaped recess, the lid comprising a metallic material; and
an electronic device to be received by the circle-shaped recess and comprising
a disc-shaped device housing,
a battery carried within the disc-shaped device housing,
a visual indicator carried by the disc-shaped device housing and coupled to the battery, and
a processor carried by the disc-shaped device housing and coupled to the battery and the visual indicator, the processor configured to cause the visual indicator to generate a visual indication.

11. The caviar container of claim 11 wherein the electronic device comprises a sensor carried by the disc-shaped device housing and coupled to the processor; and wherein the processor is configured to activate the visual indicator based upon the sensor.

12. The caviar container of claim 11 wherein the sensor comprises an ambient light sensor; and wherein the processor is configured to activate the visual indicator when the ambient light sensor detects an ambient light value below a threshold value, or
wherein the sensor comprises a proximity sensor; and
wherein the processor is configured to activate the visual indicator when the proximity sensor detects a moving object within a threshold distance.

13. The caviar container of claim 11 or 12 wherein at least one of a to c:
a. the circle-shaped recess defines a canted annular lid wall; and wherein the disc-shaped device housing defines a canted annular device wall to abut the canted annular lid wall;
b. wherein the visual indicator comprises at least one light emitting diode (LED) carried by an external surface of the disc-shaped device housing.
c. wherein the electronic device comprises an overlayer on the visual indicator, the overlayer comprising visual indicia; and wherein uppermost portions of the lid are flush and aligned with uppermost portions of the disc-shaped device housing.

14. A method for making a food container, the method comprising:
forming a housing defining a food receiving recess therein and having a closed first end and an open second end opposite the closed first end;
forming a lid to be received by the open second end of the housing and having opposing first and second major surfaces, the first major surface to face the food receiving recess, the second major surface defining a recess; and
positioning an electronic device to be received by the recess and comprising
a device housing,
a battery carried within the device housing, a visual indicator carried by the device housing and coupled to the battery, and
a processor carried by the device housing and coupled to the battery and the visual indicator, the processor configured to cause the visual indicator to generate a visual indication.

15. The method of claim 14 wherein the electronic device comprises a sensor carried by the device housing and coupled to the processor; and wherein the processor is configured to activate the visual indicator based upon the sensor, optionally
wherein the sensor comprises an ambient light sensor; and wherein the processor is configured to activate the visual indicator when the ambient light sensor detects an ambient light value below a threshold value.
